# FASCICULE DE BREVET EUROPEEN

(11) **EP 2 879 923 B1**
(45) Date de publication et mention de la délivrance du brevet: **16.11.2016**
(21) Numéro de dépôt: 13731841.6
(22) Date de dépôt: 10.06.2013
(51) Int. Cl.: B60T 7/06, B60R 21/09, G05G 1/323

(54) **DISPOSITIF DE MONTAGE D'UNE PEDALE D'UN VEHICULE AUTOMOBILE**
FAHRZEUGPEDALERIE
VEHICLE PEDAL MOUNTING ARRANGEMENT

(30) Priorité: 01.08.2012 FR 1257473
(43) Date de publication de la demande: 10.06.2015
(73) Titulaire: Renault S.A.S., 92100 Boulogne-Billancourt (FR)
(72) Inventeur: CALCIU, Catalin Nicusor, Bucarest (RO)
(86) Numéro de dépôt international: PCT/FR2013/051331
(87) Numéro de publication internationale: WO 2014/020248

(56) Documents cités:
- EP-A1- 0 965 506
- EP-A1- 2 540 579
- WO-A1-2012/146403
- FR-A1- 2 838 695

## Description

L'invention se rapporte à un dispositif de montage d'une pédale d'actionnement sur un véhicule. Généralement un véhicule automobile conventionnel est doté de différentes pédales d'actionnement, comme par exemple, une pédale de frein ou une pédale d'embrayage, situées au niveau des pieds du conducteur, et émergeant dans un espace libre placé à l'avant du siège conducteur. Outre le fait d'accomplir avec rigueur et précision leur fonction, ces pédales doivent être montées dans le véhicule en respectant certaines règles de sécurité, notamment vis-à-vis du conducteur. L'invention se rapporte plus spécialement à un dispositif de montage d'une pédale d'actionnement tenant compte de la sécurité du conducteur, lors par exemple d'un choc frontal.

Les dispositifs de montage d'une pédale d'actionnement dans un véhicule automobile existent et ont déjà fait l'objet de brevets. On peut par exemple citer le brevet EP0965506, qui se rapporte à un dispositif de montage d'une pédale, dont le principe consiste à mettre en oeuvre un dispositif de cisaillage prévu pour désolidariser la pédale de son support, dans le cas d'une intrusion partielle du bloc avant dans l'habitacle, suite à un choc. En effet, la pédale est fixée à son support par l'intermédiaire d'un axe de rotation, et le dispositif de cisaillage est arrimé à un élément fixe du véhicule, pour sectionner les deux extrémités de l'axe de la pédale, lorsque ledit support pénètre dans ledit habitacle sous l'effet d'une collision. Par ce biais, la course accidentelle de la pédale, qui est initialement liée au support en mouvement, est stoppée très tôt, évitant ainsi de venir percuter, de façon dangereuse, les jambes du conducteur.

Toutefois, avec ce type de dispositif de montage, il existe un risque non négligeable de voir le dispositif de cisaillage se déclencher intempestivement, sans raison apparente, alors que le véhicule est dans une phase de roulage normale, sans être soumis à un choc particulier. La pédale se décrocherait alors de son support, sans que le conducteur ne puisse bénéficier de la fonction habituelle de ladite pédale, comme par exemple, un freinage ou un débrayage. Même si les probabilités de voir un tel phénomène se produire demeurent minimes, les conséquences qu'il engendrerait, pourraient s'avérer très graves en matière de dommages corporels et/ou matériels. Il devient alors nécessaire de sécuriser les dispositifs de montage de pédale existants, afin d'éviter que de tels phénomènes potentiellement dangereux, ne se produisent.

Les procédés de montage d'une pédale sur un véhicule automobile selon l'invention, sont conçus pour permettre à la pédale, qui se serait ainsi désolidarisée de son support, que ce soit en situation de roulage normal ou en situation accidentelle, de conserver au moins partiellement, son intégrité fonctionnelle. De cette manière, un conducteur surpris de ne pas pouvoir actionner normalement la pédale de frein ou la pédale d'embrayage, pourra toujours rattraper la situation, en exerçant une pression du pied sur la pédale déficiente, de façon à obtenir la fonction voulue.

L'invention se rapporte à un dispositif de montage d'une pédale d'un véhicule, comprenant un support sur lequel est montée la pédale par l'intermédiaire d'un axe de rotation principal, des moyens de cisaillage reliés à un élément de carrosserie fixe dudit véhicule, lesdits moyens de cisaillages étant aptes à cisailler radialement ledit axe principal dans le cas d'un déplacement dudit support par rapport audit élément de carrosserie, pour désolidariser ladite pédale dudit support. La principale caractéristique d'un dispositif de montage selon l'invention est qu'il comprend un axe secondaire solidaire de la pédale et apte à positionner la pédale, qui a été cisaillée, dans une position fonctionnelle nouvelle. Il est important de rappeler qu'une pédale d'actionnement comprend un bras de levier, dont une extrémité se termine par un patin matérialisant une surface d'appui sur laquelle le conducteur va exercer une poussée avec son pied, et dont l'autre extrémité est solidarisée à l'axe de rotation principal. Ainsi, lorsque ledit axe de rotation est cisaillé, c'est l'ensemble de la pédale qui est libéré de son support, et qui peut donc se déplacer librement. L'axe secondaire va contribuer à placer la pédale, qui a été cisaillée, dans une position secondaire, qui va lui permettre, au moins partiellement, d'assurer sa fonction originelle. Il est supposé que la position fonctionnelle secondaire est différente de la position fonctionnelle normale. En effet, la pédale va se retrouver dans une position voisine de celle qu'elle occupe habituellement, et va conserver ainsi la possibilité d'être actionnée par une simple pression du pied de la part du conducteur, pour assurer sa fonction initiale. De cette manière, l'axe secondaire peut représenter, soit à un organe de guidage qui va permettre d'orienter le déplacement de la pédale cisaillée afin que celle-ci se place dans une nouvelle position fonctionnelle, soit le nouvel axe de rotation de ladite pédale qui s'est déplacée suite à son cisaillage. Il est à noter que l'axe secondaire peut remplir à la fois les deux fonctions précédentes. Les dispositifs de montage selon l'invention ont été initialement développés pour les pédales de frein montées sur un véhicule automobile, car une défaillance imprévue du système de freinage lors d'une phase normale de roulage, peut avoir des conséquences dramatiques sur les personnes, alors qu'une défaillance de l'embrayage peut paraitre moins sévère.

Avantageusement, l'axe secondaire constitue le nouvel axe de rotation de la pédale dans sa nouvelle position fonctionnelle. En effet, une fois que la pédale a été cisaillée, l'axe de rotation principal est devenu inopérant. Or, puisque la pédale a été initialement conçue pour fonctionner par rotation, il a fallu lui trouver un axe de rotation par substitution à travers cet axe de rotation secondaire.

De façon préférentielle, l'axe secondaire est parallèle à l'axe principal, lorsque la pédale est montée articulée sur le support. Puisque la pédale, qui a été cisaillée peut être amenée à pivoter autour de son axe secondaire, et comme son déplacement accidentel suite à son cisaillage s'effectue dans un plan longitudinal du véhicule, il est fondamental que ladite pédale conserve la même direction de rotation, pour continuer d'assurer sa fonction initiale.

Préférentiellement, l'axe principal joint deux parois parallèles et verticales du support, chacune desdites parois comprenant une ouverture et l'axe secondaire saillant dans chacune desdites ouvertures. Pour cette configuration, il est supposé que l'axe secondaire émerge dans chacune desdites ouvertures, et que le mouvement permettant à la pédale d'atteindre sa nouvelle position de fonctionnement, est notamment rendu possible par l'intermédiaire des ces ouvertures, qui n'entravent pas le déplacement de l'axe secondaire. Ces ouvertures peuvent être, soit assimilables à des fentes de guidages qui vont permettre le coulissement orienté de l'axe secondaire, soit étendues pour ne pas gêner le déplacement de la pédale dans une quelconque direction.

De façon avantageuse, chaque paroi s'étend selon une direction longitudinale du véhicule, l'axe principal et l'axe secondaire s'étendant selon une direction transversale dudit véhicule. De cette manière, les deux axes sont perpendiculaires aux deux parois, le déplacement de la pédale cisaillée s'effectuant parallèlement auxdites parois, entre celles-ci.

Avantageusement, les ouvertures des parois dont identiques et se font face selon une direction transversale du véhicule. Cette configuration évite à la pédale de se retrouver dans une position désaxée, et donc peu opérationnelle.

De façon préférentielle, chaque ouverture comporte une extrémité de blocage destinée à recevoir l'axe secondaire, une fois que l'axe principal a été cisaillé. En effet, lorsqu'un conducteur actionne la pédale qui s'est cisaillée, l'axe secondaire se déplace dans chaque ouverture, pour venir se bloquer au niveau d'une extrémité effilée desdites ouvertures. Cette extrémité va contribuer à figer la nouvelle position fonctionnelle de la pédale cisaillée.

Préférentiellement, l'axe secondaire est situé derrière l'axe principal lorsque la pédale est montée sur le support, l'extrémité de blocage de chaque ouverture étant située à l'arrière desdites ouvertures.

De façon avantageuse, l'axe principal est en plastique et l'axe secondaire est en acier. En effet, lorsque le véhicule est confronté à un choc frontal, il est important que l'axe principal puisse être cisaillé facilement de façon à être instantanément désolidarisé du support. A l'inverse, l'axe secondaire doit être solide et résistant, et n'offrir aucune possibilité d'être rompu par une sollicitation extérieure, car il constitue un ultime recours sécuritaire.

L'invention a pour deuxième objet une pédale destinée à être montée sur un support de véhicule automobile au moyen d'un dispositif de montage conforme à l'invention. La principale caractéristique d'une pédale selon l'invention, est qu'elle comprend un axe secondaire. En effet, puisque l'axe secondaire est fixé de façon inamovible à la pédale, il fait partie intégrante de ladite pédale. Cet axe secondaire peut, soit constituer une pièce rapportée par rapport à la pédale, soit constituer avec ladite pédale une seule et même pièce, fabriquée en une seule opération.

Les dispositifs de montage d'une pédale selon l'invention, présentent l'avantage d'accroître la sécurité des occupants d'un véhicule, en permettant au conducteur de laisser une course résiduelle d'actionnement de la pédale, une fois qu'elle a été désolidarisée de son support, suite à un choc ou dans une situation normale de roulage. Malgré cette fonctionnalité supplémentaire, ces dispositifs ont l'avantage de conserver un encombrement constant par rapport aux dispositifs existants. Enfin, la simplicité du mécanisme de fonctionnement de la pédale qui a été cisaillée, confère aux dispositifs de montage selon l'invention, un caractère de grande sûreté et de grande fiabilité.

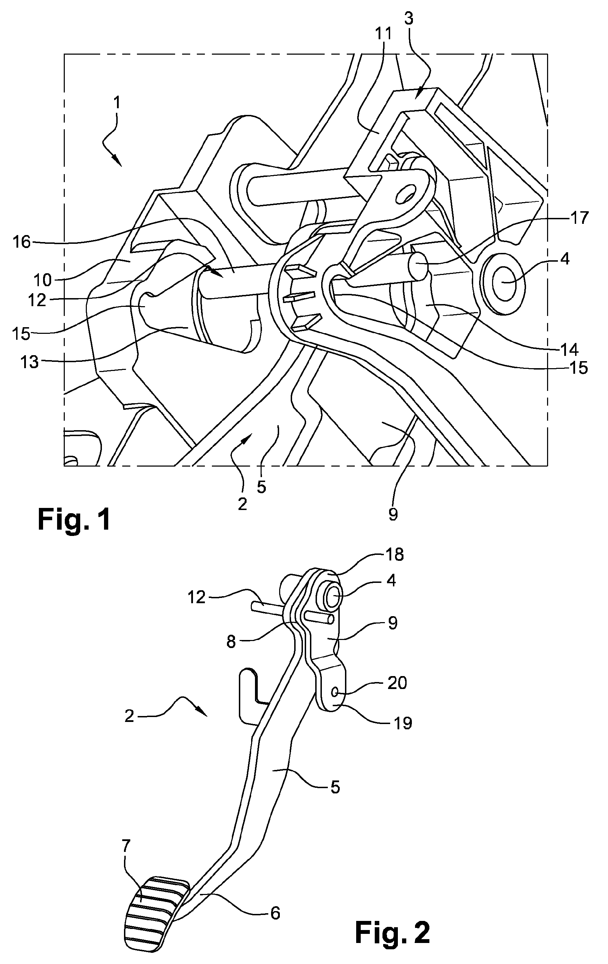

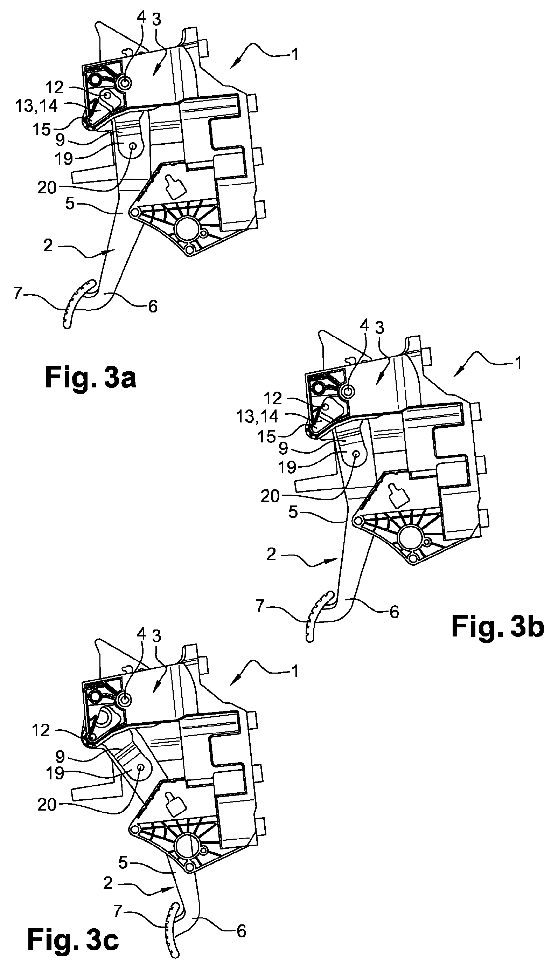

On donne ci-après une description détaillée d'un mode de réalisation préféré d'un dispositif de montage d'une pédale selon l'invention, en se référant aux figures 1 et 3c.
- La figure 1 est une vue en perspective de la liaison articulée d'une pédale de frein sur un support selon un dispositif de montage selon l'invention,
- La figure 2 est une vue en perspective d'une pédale de frein selon l'invention,
- La figure 3a est une vue de coté de la liaison articulée de la pédale de frein sur un support, issue d'un dispositif de montage selon l'invention, lors d'une première étape de fonctionnement en mode dégradé,
- La figure 3b est une vue de coté de la liaison articulée de la pédale de frein sur un support, issue d'un dispositif de montage selon l'invention, lors d'une deuxième étape de fonctionnement en mode dégradé,
- La figure 3c est une vue de coté de la liaison articulée de la pédale de frein sur un support selon un dispositif de montage selon l'invention, lors d'une troisième étape de fonctionnement en mode dégradé,

En se référant aux figures 1 et 2, un dispositif de montage 1 d'une pédale 2 de frein selon l'invention, comprend un support 3 sur lequel est montée ladite pédale 2 de frein par l'intermédiaire d'un axe de rotation 4 principal, et des moyens de cisaillage solidarisés à un élément de carrosserie fixe. Les moyens de cisaillage, qui peuvent par exemple être analogues à ceux décrits dans le brevet EP0965506, comprennent deux couteaux constitués chacun par deux branches coupantes disposées en V. En se référant à la figure 2, la pédale 2 est constituée conventionnellement par un bras de levier 5 allongé, dont une première extrémité 6 se termine par un patin 7 rugueux, matérialisant la surface d'appui sur laquelle un conducteur va exercer une pression avec le pied pour déclencher le freinage du véhicule, et dont une deuxième extrémité 8 est reliée de façon articulée au support 3, par l'intermédiaire de l'axe de rotation 4 principal. Une patte d'interface 9 fixée rigidement au bras de levier 5 de la pédale 2, au niveau de sa deuxième extrémité 8, est solidarisée à des éléments de transmission rigides, non visibles sur les figures, pour déplacer lesdits éléments sous l'effet de la rotation de la pédale 2, et actionner le système de freinage. Ladite patte 9 est plane et de faible épaisseur, et s'étend selon un axe longitudinal du bras de levier 5, une première extrémité 18 de la dite patte 9 étant traversée par l'axe de rotation principal 4, et une deuxième extrémité 19 étant reliée auxdits éléments de transmission rigides.

En se référant à la figure 1, sur laquelle apparaît l'emplacement dans lequel est positionné l'axe de rotation principal 4, ledit emplacement étant par assimilation également désigné par la référence 4, ledit axe de rotation principal 4 est fixée à deux parois 10,11 parallèles et verticales du support 3, lesdites parois 10,11 s'étendant selon une direction longitudinale du véhicule. Cet axe de rotation principal 4, qui est préférentiellement en plastique pour pouvoir être facilement cisaillé en cas de choc frontal, lors d'une intrusion dudit support 3, est perpendiculaire auxdites parois 10,11 et s'étend donc selon une direction transversale dudit véhicule. En fonctionnement normal, une pression du pied appliquée sur le patin 7 engendre une rotation de la pédale 2 autour de l'axe de rotation 4 principal, qui va provoquer le déplacement des éléments de transmission par l'intermédiaire de la patte d'interface 9, activant ainsi le système de freinage du véhicule. La deuxième extrémité 8 du bras de levier 5 porte un axe secondaire 12, préférentiellement en acier, et qui est rigidement fixé audit bras de levier 5. Chacune des deux parois 10,11 du support 3, portant l'axe de rotation principal 4, est dotée d'une ouverture 13,14 ayant approximativement une forme triangulaire. Ces deux ouvertures 13,14 sont identiques et sont parfaitement alignées l'une sur l'autre selon une direction transversale du véhicule. Chacune desdites ouvertures 13,14 dispose d'une extrémité arrière 15 effilée, de forme arrondie et dont les dimensions sont légèrement supérieures au diamètre de l'axe secondaire 12. En se référant à la figure 1, lorsque la pédale 2 est montée sur le support 3 entre les deux parois 10,11, l'axe secondaire 12 se retrouve parallèle à l'axe de rotation principal 4, et saille au niveau de ses deux extrémités 16,17 dans chacune des deux ouvertures 13,14, à la partie avant desdites ouvertures 13,14. L'axe secondaire 12 se retrouve sensiblement à la même hauteur que l'axe de rotation principal 4, et en arrière de celui-ci. En se référant aux figures 1 et 2, il est à noter que la patte d'interface 9 est également traversée par l'axe secondaire 12, au voisinage de sa première extrémité 18.

En se référant à la figure 3a, lorsqu'un usager exerce une pression sur le patin 7 de la pédale 2 de frein, alors que l'axe de rotation 4 principal a été cisaillé de façon inopinée, ladite pédale 2 amorce une rotation autour du point de contact 20 entre la deuxième extrémité 19 de la patte d'interface 9 et les éléments de transmission rigides, puisque les deux extrémités 6,8 du bras de levier 5 sont momentanément libres de tout mouvement. Lors de cette phase préliminaire de rotation, la pédale 2 ne fait que pivoter, sans pouvoir déplacer les éléments de transmission et donc sans pouvoir activer le système de freinage.

En se référant à la figure 3b, lorsque la rotation de la pédale 2 se poursuit, l'axe de rotation 12 secondaire accompagne le pivotement de la pédale 2 de laquelle il est rigidement solidaire, en se rapprochant de l'extrémité arrière arrondie 15 desdites ouvertures 13,14. Durant cette deuxième phase de rotation de la pédale 2, ladite pédale 2 ne fait que pivoter autour du point de contact 20 entre la deuxième extrémité 19 de la patte d'interface 9 et les éléments de transmission rigides, toujours sans pouvoir déplacer lesdits éléments de transmission rigides, et donc sans pouvoir déclencher le système de freinage.

En se référant à la figure 3c, l'axe secondaire 12 finit par se caler dans les deux extrémités arrière et arrondies 15 des ouvertures 13,14 des deux parois 10,11 du support 3. En maintenant une pression sur le patin 7 de la pédale 2, ladite pédale 2 continue de pivoter, mais autour de l'axe secondaire 12, qui est bloqué en translation au fond des extrémités arrière 15 des deux ouvertures 13,14. Une prolongation de la rotation autour de cet axe secondaire 12, provoque alors une poussée sur les éléments de transmission rigides, qui finissent par se déplacer et par activer le système de freinage.

La rotation autour du point d'intersection entre la deuxième extrémité 19 de la patte d'interface 9 et les éléments de transmission, et pour laquelle lesdits éléments ne sont pas déplacés, correspond environ aux deux tiers de la course totale de ladite pédale 2, tandis que la rotation autour de l'axe secondaire 12 et pour laquelle le système de freinage est activé, correspond au tiers de ladite course totale.

## Revendications

1. Dispositif de montage d'une pédale (2) d'un véhicule, comprenant un support (3) sur lequel est montée la pédale (2) par l'intermédiaire d'un axe de rotation principal (4), des moyens de cisaillage reliés à un élément de carrosserie fixe dudit véhicule, lesdits moyens de cisaillages étant aptes à cisailler radialement ledit axe principal (4) dans le cas d'un déplacement dudit support (3) par rapport audit élément de carrosserie, pour désolidariser ladite pédale (2) dudit support (3), **caractérisé en ce qu'**il comprend un axe secondaire (12) solidaire de la pédale (2) et apte à positionner la pédale (2), qui a été cisaillée, dans une nouvelle position fonctionnelle.

2. Dispositif selon la revendication 1, **caractérisé en ce que** l'axe secondaire (12) constitue le nouvel axe de rotation de la pédale (2) dans sa nouvelle position fonctionnelle.

3. Dispositif selon l'une quelconque des revendications 1 ou 2, **caractérisé en ce que** l'axe secondaire (12) est parallèle à l'axe principal (4), lorsque la pédale (2) est montée articulée sur le support (3).

4. Dispositif selon la revendication 3, **caractérisée en ce que** l'axe principal (4) joint deux parois (10,11) parallèles et verticales du support (3), et **en ce que** chacune desdites parois (10,11) comprend une ouverture (13,14), l'axe secondaire (12) saillant dans lesdites ouvertures (13,14).

5. Dispositif selon la revendication 4, **caractérisé en ce que** chaque paroi (10,11) s'étend selon une direction longitudinale du véhicule, et **en ce que** l'axe principal (4) et l'axe secondaire (12) s'étendent selon une direction transversale dudit véhicule.

6. Dispositif selon l'une quelconque des revendications 4 ou 5, **caractérisé en ce que** les ouvertures (13,14) des parois dont identiques et se font face selon une direction transversale du véhicule.

7. Dispositif selon la revendication 6 **caractérisé en ce que** chaque ouverture (13,14) comporte une extrémité (15) de blocage destinée à recevoir l'axe secondaire (12), une fois que l'axe principale (4)a été cisaillé.

8. Dispositif selon la revendication 7, **caractérisé en ce que** l'axe secondaire (12) est situé derrière l'axe principal (4) lorsque la pédale (2) est montée sur le support (3), et **en ce que** l'extrémité (15) de blocage de chaque ouverture (13,14) est située à l'arrière desdites ouvertures (13,14).

9. Dispositif selon l'une quelconque des revendications 1 à 8, **caractérisé en ce que** l'axe principal (4) est en plastique et l'axe secondaire (12) est en acier.

10. Pédale (2) destinée à être montée sur un support (3) de véhicule automobile au moyen d'un dispositif (1) de montage conforme à l'une quelconque des revendications 1 à 9, **caractérisé en ce qu'**elle comprend un axe secondaire (12).

## Patentansprüche

1. Vorrichtung zur Montage eines Pedals (2) eines Fahrzeugs, welche einen Träger (3), an welchem das Pedal (2) mit Hilfe einer Hauptdrehachse (4) montiert ist, und mit einem festen Karosserieelement verbundene Schneidmittel aufweist, wobei die Schneidmittel dafür angepasst sind, im Fall einer Verlagerung des Trägers (3) in Bezug auf das Karosserieelement die Hauptachse (4) radial abzuschneiden, um das Pedal (2) von dem Träger (3) zu trennen, **dadurch gekennzeichnet, dass** sie eine sekundäre Achse (12) aufweist, welche fest mit dem Pedal (2) verbunden ist und geeignet ist, das Pedal (2), welches abgeschnitten worden ist, in einer neuen funktionsfähigen Position zu positionieren.

2. Vorrichtung nach Anspruch 1, **dadurch gekennzeichnet, dass** die sekundäre Achse (12) die neue Drehachse des Pedals (2) in seiner neuen funktionsfähigen Position darstellt.

3. Vorrichtung nach einem der Ansprüche 1 oder 2, **dadurch gekennzeichnet, dass** die sekundäre Achse (12) parallel zur Hauptachse (4) verläuft, wenn das Pedal (2) gelenkig an dem Träger (3) montiert ist.

4. Vorrichtung nach Anspruch 3, **dadurch gekennzeichnet, dass** die Hauptachse (4) zwei parallele und vertikale Wände (10, 11) des Trägers (3) miteinander verbindet, und dass jede der Wände (10, 11) eine Öffnung (13, 14) aufweist, wobei die zweite Achse (12) in den Öffnungen (13, 14) vorsteht.

5. Vorrichtung nach Anspruch 4, **dadurch gekennzeichnet, dass** jede Wand (10, 11) sich gemäß einer longitudinalen Richtung des Fahrzeugs erstreckt, und dass sich die Hauptachse (4) und die sekundäre Achse (12) gemäß einer Querrichtung des Fahrzeugs erstrecken.

6. Vorrichtung nach einem der Ansprüche 4 oder 5, **dadurch gekennzeichnet, dass** die Öffnungen (13, 14) der Wände identisch sind und sich gemäß einer Querrichtung des Fahrzeugs gegenüber liegen.

7. Vorrichtung nach Anspruch 6, **dadurch gekennzeichnet, dass** jede Öffnung (13, 14) ein Blockierende (15) aufweist, welches dafür vorgesehen ist, die sekundäre Achse (12) aufzunehmen, wenn die Hauptachse (4) abgeschnitten worden ist.

8. Vorrichtung nach Anspruch 7, **dadurch gekennzeichnet, dass** sich die sekundäre Achse (12) hinter der Hauptachse (4) befindet, wenn das Pedal (2) an dem Träger (3) montiert ist, und dass sich das Blockierende (15) von jeder Öffnung (13, 14) am hinteren Ende der Öffnungen (13, 14) befindet.

9. Vorrichtung nach einem der Ansprüche 1 bis 8, **dadurch gekennzeichnet, dass** die Hauptachse (4) aus Kunststoff besteht und die sekundäre Achse (12) aus Stahl besteht.

10. Pedal (2), welches dafür vorgesehen ist, an einem Träger (3) eines Kraftfahrzeugs mittels einer Montagevorrichtung (1) nach einem der Ansprüche 1 bis 9 montiert zu werden, **dadurch gekennzeichnet, dass** es eine sekundäre Achse (12) aufweist.

## Claims

1. Device for mounting a pedal (2) of a vehicle comprising a support (3) on which the pedal (2) is mounted by means of a principal rotary shaft (4) and shearing means connected to a fixed bodywork element of said vehicle, said shearing means being capable of radially shearing off said principal shaft (4) in the case of a displacement of said support (3) relative to said bodywork element, in order to detach said pedal (2) from said support (3), **characterized in that** it comprises a secondary shaft (12) which is fixed to the pedal (2) and is capable of positioning the pedal (2), which has been sheared off, in a new operating position.

2. Device according to Claim 1, **characterized in that** the secondary shaft (12) constitutes the new rotary shaft of the pedal (2) in its new operating position.

3. Device according to either of Claims 1 and 2, **characterized in that** the secondary shaft (12) is parallel to the principal shaft (4) when the pedal (2) is mounted in an articulated manner on the support (3).

4. Device according to Claim 3, **characterized in that** the principal shaft (4) joins two parallel and vertical walls (10, 11) of the support (3), and **in that** each of said walls (10, 11) comprises an opening (13, 14), the secondary shaft (12) protruding into said openings (13, 14).

5. Device according to Claim 4, **characterized in that** each wall (10, 11) extends in a longitudinal direction of the vehicle and **in that** the principal shaft (4) and the secondary shaft (12) extend in a transverse direction of said vehicle.

6. Device according to either of Claims 4 and 5, **characterized in that** the openings (13, 14) of the walls are identical and oppose one another in a transverse direction of the vehicle.

7. Device according to Claim 6, **characterized in that** each opening (13, 14) comprises a blocking end (15) designed to receive the secondary shaft (12) once the principal shaft (4) has been sheared off.

8. Device according to Claim 7, **characterized in that** the secondary shaft (12) is located behind the principal shaft (4) when the pedal (2) is mounted on the support (3), and **in that** the blocking end (15) of each opening (13, 14) is located to the rear of said openings (13, 14).

9. Device according to any one of Claims 1 to 8, **characterized in that** the principal shaft (4) is made of plastics material and the secondary shaft (12) is made of steel.

10. Pedal (2) designed to be mounted on a motor vehicle
support (3) by means of a device (1) for mounting according to any one of Claims 1 to 9, **characterized in that** it comprises a secondary shaft (12).
